# EUROPEAN PATENT SPECIFICATION

(11) **EP 1 741 622 B1**
(45) Date of publication and mention of the grant of the patent: **13.08.2008**
(21) Application number: 06112010.1
(22) Date of filing: 30.03.2006
(51) Int. Cl.: B62D 63/06, B62K 27/00

(54) **Trailer for two-wheeled vehicles**
Anhänger für Zweiradfahrzeuge
Remorque pour véhicule à deux roues

(30) Priority: 08.07.2005 ES 200501591 U
(43) Date of publication of application: 10.01.2007
(73) Proprietor: TRAFFIC LINE, S.L.U., 08230 Barcelona (ES)
(72) Inventor: Solsona Peñarroya, Josep, 08230, Matadepera (Barcelona) (ES)
(74) Representative: Pons Arino, Angel

(56) References cited:
- GB-A- 2 374 049
- US-A- 3 753 579
- US-A- 3 941 406
- US-A- 4 786 073
- US-A1- 2005 093 273

## Description

### Object of the invention

This invention refers to a trailer for transporting two-wheeled vehicles such as bicycles, mopeds and motorcycles which is pulled by a tractor vehicle to which it is connected by means of a trailer hitch.

The trailer to which the invention refers is intended primarily to transport two-wheeled vehicles safely and conveniently thanks to the fastening systems of the vehicles and the way in which they are positioned on the trailer.

Another aspect of the invention lies in the fact that the trailer can be folded to reduce the space it takes up to a minimum when not being used.

### BACKGROUND OF THE INVENTION

Trailers for transporting motorcycles and similar vehicles of the type composed of a frame equipped with a platform on which the motorcycles are positioned lengthwise in respect of the direction of movement of the trailer are known to exist on the market.

This type of trailer has a fixed platform equipped with means for the placement of one or more motorcycles which do not make it possible to distribute the weight evenly on the platform, thereby creating a potential risk of accident.

Moreover, this type of trailer, whose minimum length is equal to the length of the motorcycle being transported, poses serious storage problems when the trailer is not being used.

US patent application 2005/0093273 reflects the problem above described. It discloses a trailer assembly including a bed assembly having a plurality of sections movably coupled to one another for permitting movement between an extended configuration and a folded configuration. The trailer bed assembly may comprise brackets to permit mounting i.a. a rack to carry bikes, boats, kayaks, or the like to be carried in the trailer.

Using such brackets for fixing objects brings difficulties in balancing the weight of the objects carried on the trailer

### DESCRIPTION OF THE INVENTION

The trailer for two-wheeled vehicles proposed by the invention resolves the problems described above by allowing the weight of the motorcycles and/or bicycles to be evenly distributed on the platform in a practical and safe manner, and can also be folded to take up as little space as possible when not being used.

To do so, and more specifically, the trailer is of the type composed by a rolling frame equipped with a trailer hitch for connection to the tractor which pulls it, which frame is equipped with three horizontal platforms placed transversally with respect to the direction of movement of the trailer, the central platform of which is bound to the frame and the outer platforms are articulated, by means of hinges, to the central platform starting at their contiguous longitudinal ends to facilitate folding. The platforms have means for fastening vehicles with two or more wheels and means for distributing and balancing the weight of the vehicles on the platform.

The means for fastening the vehicles on the platform consist of a pair of forks articulated at their free ends to the end pieces of the platform, so that the conical shape of the top of the fork is coupled with the upper part of the wheel of the vehicle being transported. The articulation is equipped with a nut mechanism to facilitate the removal of the fork and to keep the fork in place against the wheel.

The means for distributing and balancing the weight on the platform consist of "U" shaped sections forming channel in wich the wheels of the vehicle rest. The "U" shaped sections are connected to the surface of the platforms by guides that enable said "U" shaped sections to move transversally in respect of the platform.

On the free longitudinal end of the rear of the platform is a plate on whose outer surface the registration plate of the tractor vehicle and the lighting and optical signalling elements are affixed.

To facilitate the storage of the trailer, the trailer hitch can be removed from the frame.
Finally, in order for the trailer, once folded, to occupy as little space as possible, it has been designed so that the central part of the platform is considerably wider than the width of the frame.

### DESCRIPTION OF THE DRAWINGS

To supplement this description and to contribute to a clearer understanding of the characteristics of the invention, according to an example of a preferred embodiment of the invention, enclosed as an inseparable part of the description is a set of drawings which represent the following, on an illustrative and nonlimiting basis:

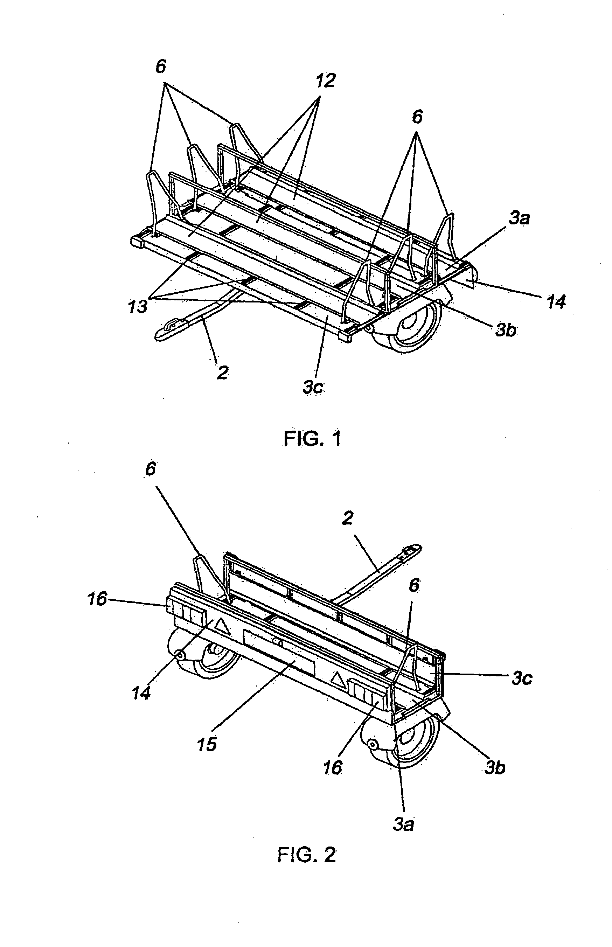

Figure 1 shows a frontal view of the trailer fro two-wheeled vehicles with the platforms unfolded.
Figure 2 shows a rear view of the trailer with platforms folded to save space.

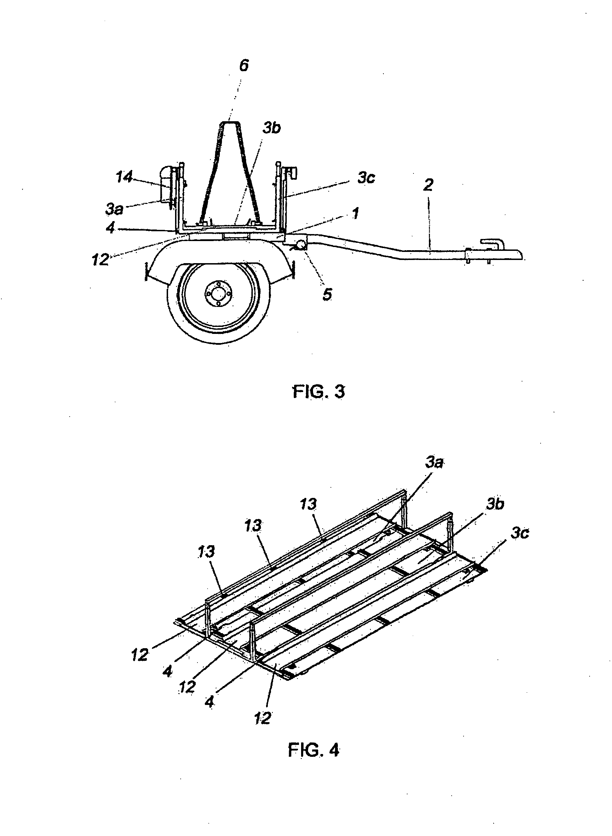

Figure 3 shows a side view of the trailer with the platforms folded.
Figure 4 shows a view of the folded platforms where the "U" shaped sections with their corresponding guides can be seen.

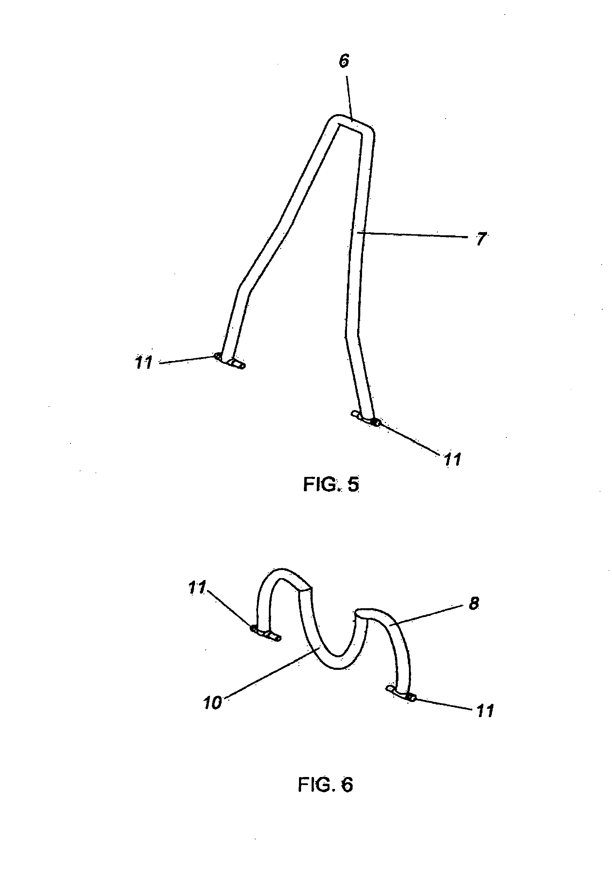

Figure 5 shows a view of the fork for fastening the wheels of the motorcycle.
Figure 6 shows an example of a special embodiment of the fork for "scooter" type motorcycles.

### PREFERRED EMBODIMENT OF THE INVENTION

Based on the figures referred to above, one can see that the trailer for vehicles with two or more wheels is composed of a rolling frame 1 equipped with a trailers hitch 2 for connecting it to a tractor vehicle, on which frame 1 are mounted three rectangular platforms 3a, 3b and 3c horizontally and transversally in respect of the direction of movement of the vehicle.

The central platform 3b is bound to the rolling frame 1, while the outer platforms 3a and 3c are articulated by means of hinges 4 to the central platform 3b starting at the continuous longitudinal edges, so that the outer platforms can tilt 90° to facilitate folding the trailer.

To facilitate storing the trailer when it is not being used, the trailer hitch 2 can be removed from the frame 1 thanks to a retractable rivet 5 that releases the hitch 2 from its coupling.

Platforms 3a, 3b and 3c are equipped with means for fastening the motorcycles consisting of three pairs of forks 6 articulated at their free ends to the ends of platforms 3a, 3b and 3c, so that the conical shape 7 of the upper part of the fork is fastened to the upper part of the wheel of the vehicle being transported.

There is a special embodiment of the invention for "scooter" type motorcycles, which have a smaller wheel diameter, where the fork 8 is "M" shaped so that the wheel of the "scooter" can fit into the inverted central section 10 of the fork.

The forks 6 and 8 are articulated to the surface of the platforms 3a, 3b and 3c by means of nuts or screws 11 to facilitate their extraction and to keep them in position against the wheels of the motorcycle. Hence, once the motorcycle is properly positioned, the forks 8 are positioned and folded against the wheels so that the conical part 7 is pressing against the upper part of the wheel, stabilising the motorcycle in this position. At this point, the screws 11 are tightened to keep the forks 8 in that position.

To distribute the motorcycles, mopeds, bicycles and other similar vehicles on the platform 3 and balance the load on the trailer, there are at least three "U" shaped sections 12 composed of channels in which the wheels of the motorcycles rest, the "U" shaped sections being connected to the respective platforms 3 by means of guides 13 that allow the sections 12 to move transversally in respect of the platform 3. Hence, by moving the sections 12 it is possible to distribute the load on the trailer according to the weight and volume of the motorcycles, mopeds, bicycles or other vehicles being transported.

If just one vehicle is being transported, the vehicle is placed on the central platform 3b without the need to unfold the outer platforms so that all of the weight falls on the wheel axle. If two vehicles are being transported, and depending on the weight and volume of the vehicles, they will be positioned on the central platform and one or both outer platforms using the aforementioned weight distributions means to balance the load.

The free lengthwise end of the rear platform 3a is equipped with a plate 14 that is approximately the same length as the platform 3a, on whose outer surface the registration plate of the tractor vehicle 15 and the lighting and optical signalling elements 16 are placed. When the outer platform 3a is folded, i.e., in a vertical position, the plate 14 is also vertical, running parallel to the platform 3a so that both the registration plate 15 and the lighting and optical signalling elements 16 are visible. When the outer platform 3a is unfolded for loading one or more vehicles, the plate 14 tilts over the axle remaining in a vertical position so that the registration plate 15 remains visible.

In order for the trailer to occupy as little space as possible when folded up, the width of the central platform is considerably greater than that of the frame.

Thanks to its versatility, the trailer is suitable for transporting covered mopeds, small quads, handicapped wheelchairs and the like.

The trailer is also suitable for carrying duly adapted containers and for transporting live animals, luggage, construction materials and tools, household appliances, etc.

## Claims

1. A trailer for transporting two-wheeled vehicles composed of a rolling frame (1) equipped with a trailer hitch (2) for connection to and pulling by a tractor vehicle, said frames being equipped with three horizontal platforms(3a, 3b, 3c) positioned transversally in respect of the direction of movement of the trailer, the central platform (3b) being bound to the frame and the outer platforms (3a, 3c) being articulated by means of hinges (4) to the central platform (3b) starting at their contiguous longitudinal ends to facilitate folding, **characterised in that** the platforms (3a, 3b, 3c) have means for fastening vehicles with two or more wheels and means for distributing and balancing the weight of the vehicles on the platform, whereby said distributing and balancing means consists of "U" shaped sections (12) forming a channel in which the wheels of the vehicle rest, the "U" shaped sections (12) being connected to the surface of the platforms (3a,3b,3c) by means of guides (13) that enable said "U" shaped sections (12) to move transversally in respect of the platforms (3a, 3b, 3c).

2. A trailer for transporting two-wheeled vehicles according to claim 1 **characterised in that** the means for fastening the vehicles on the platforms (3a, 3b, 3c) consist of a pair of forks (6, 8) articulated at their free ends to the end pieces of the platforms (3a, 3b, 3c), so that the conical shape (7) of the top of the fork (6, 8) is coupled with the upper part of the wheel of the vehicle being transported, whereby the articulation is equipped with a nut mechanism to facilitate the removal of the fork (6, 8) and to keep it in place against the wheel.

3. A trailer for transporting two-wheeled vehicles according to claim 1 **characterised in that** on the free longitudinal end of the rear of the platform (3a) is a plate (14) on whose outer surface the registration plate (15) of the tractor vehicle and the lighting and optical signalling (16) elements are placed.

4. A trailer for transporting two-wheeled vehicles according to claim 1 **characterised in that** the trailer hitch (2) can be removed from the frame (1).

5. A trailer for transporting two-wheeled vehicles according to claim **1 characterised in that** the width of the central platform(3b) is considerably wider than that of the chassis.

## Patentansprüche

1. Ein Anhänger für den Transport von Zweirädern, bestehend aus einem Rollrahmen (1), der mit einer Anhängerkupplung (2) für die Verbindung mit und das Gezogenwerden seitens eines ziehenden Fahrzeugs ausgestattet ist, wobei der besagte Rahmen mit drei horizontalen Plattformen (3a, 3b, 3c) ausgestattet ist, die schräg mit Bezug auf die Bewegungsrichtung des Anhängers positioniert sind, wobei die zentrale Plattform (3b) mit dem Rahmen verbunden ist und die äußeren Plattformen (3a, 3c) mittels Gelenken (4) mit der zentralen Plattform (3b) beginnend an deren angrenzenden längs laufenden Enden beweglich verbunden sind, um ein Zusammenfalten zu ermöglichen, **dadurch gekennzeichnet, dass** die Plattformen (3a, 3b, 3c) Mittel zur Befestigung von Fahrzeugen mit zwei oder mehr Rädern und Mittel für die Verteilung und den Ausgleich des Gewichts von Fahrzeugen auf der Plattform besitzen, wobei das besagte Mittel zur Verteilung und Ausgleich aus U-förmigen Abschnitten (12) besteht, die einen Kanal bilden, in dem die Räder des Fahrzeugs ruhen, wobei die U-förmigen Abschnitte (12) mit der Oberfläche der Plattformen (3a, 3b, 3c) mittels Führungen (13) verbunden sind, die es den besagten U-förmigen Abschnitten (12) erlauben, sich schräg gegenüber den Plattformen (3a, 3b, 3c) zu bewegen.

2. Ein Anhänger für den Transport von Zweirädern nach Anspruch 1, **dadurch gekennzeichnet, dass** die Mittel zur Befestigung der Fahrzeuge auf den Plattformen (3a, 3b, 3c) aus einem Paar Gabeln (6, 8) bestehen, die an ihren freien Enden mit den Endstücken der Plattformen (3a, 3b, 3c) beweglich verbunden sind, so dass die kegelförmige Form (7) der Spitze der Gabel (6, 8) mit dem oberen Teil des Rads des zu transportierenden Fahrzeugs gekoppelt ist, wobei die Gelenkverbindung mit einem Gewindemuttermechanismus ausgestattet ist, um die Entfernung der Gabel (6, 8) zu ermöglichen und diese in ihrer Stellung gegen das Rad zu halten.

3. Ein Anhänger für den Transport von Zweirädern nach Anspruch 1,
**dadurch gekennzeichnet, dass** sich auf dem freien längs laufenden Ende des hinteren Teils der Plattform (3a) eine Platte (14) befindet, auf deren äußerer Oberfläche das Kennzeichen (15) des ziehendem Fahrzeugs und die Beleuchtungselemente und optischen Signalgeber (16) platziert sind.

4. Ein Anhänger für den Transport von Zweirädern nach Anspruch 1, **dadurch gekennzeichnet, dass** die Anhängerkupplung (2) vom Rahmen (1) entfernt werden kann.

5. Ein Anhänger für den Transport von Zweirädern nach Anspruch 1, **dadurch gekennzeichnet, dass** die Breite der zentralen Plattform (3b) wesentlich breiter als die des Fahrwerks ist.

## Revendications

1. Une remorque pour transporter des véhicules à deux roues constituée d'un châssis roulant (1) équipé d'une attache-remorque (2) pour qu'elle soit reliée à un véhicule de traction qui la tirera, ledit châssis étant équipé de trois plateformes horizontales (3a, 3b, 3c) placées transversalement par rapport au sens de déplacement de la remorque, la plateforme centrale (3b) étant reliée au châssis et les plateformes externes (3a, 3c) étant articulées au moyen de charnières (4) à la plateforme centrale (3b) commençant à leurs extrémités longitudinales adjacentes pour faciliter le pliage, **caractérisée en ce que** les plateformes (3a, 3b, 3c) possèdent des moyens pour attacher des véhicules à deux ou plusieurs roues et des moyens pour répartir et équilibrer le poids des véhicules sur la plateforme, où lesdits moyens de répartition et d'équilibrage consistent en des sections en forme de « U » (12) formant un canal dans lequel se placent les roues du véhicule, les sections en forme de « U » (12) étant reliées à la surface des plateformes (3a, 3b, 3c) au moyen de guides (13) qui permettent aux sections en forme de « U » (12) de se déplacer transversalement par rapport aux plateformes (3a, 3b, 3c).

2. Une remorque pour transporter des véhicules à deux roues selon la revendication 1 **caractérisée en ce que** les moyens pour attacher les véhicules sur les plateformes (3a, 3b, 3c) consistent en une paire de fourches (6, 8) articulées à leurs extrémités libres aux pièces d'extrémité des plateformes (3a, 3b, 3c), pour que la forme conique (7) du sommet de la fourche (6, 8) soit couplée avec la partie supérieure de la roue du véhicule qui est transporté, où l'articulation est équipée d'un mécanisme à écrou pour faciliter le retrait de la fourche (6, 8) et pour la maintenir en place contre la roue.

3. Une remorque pour transporter des véhicules à deux roues selon la revendication 1 **caractérisée en ce que** sur l'extrémité longitudinale libre de l'arrière de la plateforme (3a) il y a une plaque (14) à la surface externe de laquelle la plaque d'immatriculation (15) du véhicule de traction et les éléments d'éclairage et de signalisation optique (16) sont placés.

4. Une remorque pour transporter des véhicules à deux roues selon la revendication 1 **caractérisée en ce que** l'attache (2) de la remorque peut être retirée du châssis (1).

5. Une remorque pour transporter des véhicules à deux roues selon la revendication 1 **caractérisée en ce que** la largeur de la plateforme centrale (3b) est nettement plus large que celle du châssis.
